**Europäisches Patentamt**

**European Patent Office**

**Office européen des brevets**

(19)

(11) Veröffentlichungsnummer: **0 162 134**
**B1**

## EUROPÄISCHE PATENTSCHRIFT

(45) Veröffentlichungstag der Patentschrift:
21.06.89

(21) Anmeldenummer: **84114337.3**

(22) Anmeldetag: **27.11.84**

(51) Int. Cl.⁴: **G 01 N 21/89, D 03 J 1/00**

(54) Verfahren und Vorrichtung zur automatischen Überwachung von textilen Flächengebilden, insbesondere Gewebebahnen.

(30) Priorität: **24.04.84 CH 2003/84**

(43) Veröffentlichungstag der Anmeldung:
**27.11.85 Patentblatt 85/48**

(45) Bekanntmachung des Hinweises auf die Patenterteilung:
**21.06.89 Patentblatt 89/25**

(84) Benannte Vertragsstaaten:
**BE DE FR GB IT**

(56) Entgegenhaltungen:
**CH-A-389 280**
**DE-A-1 710 996**
**DE-A-1 961 710**
**DE-A-2 151 290**
**GB-A-2 027 191**
**US-A-3 502 115**

(73) Patentinhaber: **ZELLWEGER USTER AG, Wilstrasse 11, CH- 8610 Uster (CH)**

(72) Erfinder: **Aemmer, Peter, Dr.,**
**Baeumlisaecherstrasse 36, CH- 8907 Wettswil (CH)**
Erfinder: **Aeppli, Kurt, Grundstrasse 4, CH- 8610 Uster (CH)**

(74) Vertreter: **Dipl.- Phys.Dr. Manitz Dipl.- Ing., Dipl.- Wirtsch. Finsterwald Dipl.- Ing. Grämkow Dipl.- Chem.Dr. Heyn Dipl.- Phys. Rotermund, Morgan, B.Sc.(Phys.) Robert- Koch- Strasse 1, D-8000 München 22 (DE)**

## Beschreibung

Die Erfindung betrifft ein Verfahren zur automatischen Überwachung von textilen Flächengebilden, insbesondere Gewebebahnen, bei welchem die Gewebebahnen unmittelbar an der Webmaschine oder an einer von dieser räumlich getrennten Gewebeaufwickelvorrichtung durch eine elektro-optische Einrichtung fortlaufend abgetastet und fehlerhafte Abweichungen von der als normal bewerteten Textur der Gewebebahnen festgestellt und angezeigt werden, wobei als elektro-opische Einrichtung ein die Gewebebahn überstreichender Abtastkopf verwendet wird und bei der Auswertung der Signale des Abtastkopfes diejenigen Signale bevorzugt werden, welche eine fehlerhafte Abweichung von einer bestimmten Ausdehnung und/oder Häufigkeit und/oder Periodizität repräsentieren.

Die Überwachung von Gewebebahnen erfolgt in der heutigen Webereipraxis meistens auf sogenannten Warenschautischen oder Warenschaumaschinen, bei denen das Gewebe über eine ebene Schautafel oder über einen gebogenen Schautisch geführt und mit Hilfe einer in der Schautafel bzw. im Schautisch eingebauten Beleuchtung von Auge kontrolliert wird. Es wurde schon vorgeschlagen, die für die Bedienungsperson anstrengende Überwachungstätigkeit durch die Verwendung von Sensorsystemen wie Zeilenkameras, Flächenkameras oder Laserscannern zu automatisieren, wobei alleine schon wegen der Kosten diese Sensorsysteme ebenfalls an einer Art von Warenschautisch angeordnet sind. Diesen beiden Arten von Überwachungssystemen ist somit gemeinsam, dass sie getrennt von der Webmaschine und zeitlich oft relativ lange nach dem Webprozeß eingesetzt werden.

Hierbei hat die Bedienungsperson nicht nur das Gewebe zu kontrollieren, sondern nach Möglichkeit auch die gefundenen Fehler auszubessern, was teilweise auch auf speziellen Putz- oder Ausnähtischen erfolgt. Kann ein Fehler nicht ausgebessert werden, muß das fehlerhafte Stück herausgeschnitten werden. Dieses kann dann bestenfalls als Ware zweiter Qualität verkauft werden. Da es immer wieder vorkommt, daß das Gewebe Fehler aufweist, die durch Eingriffe in den Webprozeß hätten vermieden werden können, wurde schon mehrfach vorgeschlagen, die Überwachung des Gewebes direkt an der Webmaschine vorzunehmen, weil dann die Möglichkeit eines korrigierenden Eingriffs bestünde.

So ist aus der US-PS-3 502 115 bekannt, direkt an der Webmaschine eine Inspektionsstation in der Art eines Warenschautisches einzurichten, damit Fehler, die durch eine Änderung der Einstellung der Webmaschine behoben werden könnten, möglichst frühzeitig erkannt werden. Dadurch sollen die erforderlichen Einstellungen der Webmaschine rasch vorgenommen und die Menge von Gewebe zweiter Qualität vermindert werden können.

Wenn man sich vorstellt, daß die Arbeitsbedingungen für das Bedienungspersonal im Websaal wesentlich schlechter sind als in dem Inspektionsraum, in dem die Warenschau üblicherweise stattfinden, dann wird man zum Schluß kommen, daß diese Art der Gewebeinspektion eher zu einer Erhöhung als zu einer Verminderung von Gewebe zweiter Qualität führen wird. Abgesehen davon geht die Tendenz in der Weberei eindeutig in Richtung höherer Produktivität. Da die Produktionsgeschwindigkeit einer Webmaschine wesentlich kleiner ist als die Gewebegeschwindigkeit bei der Warenschau, ist unter diesem Aspekt die Trennung von Webprozeß und Gewebekontrolle die wirtschaftlich sinnvollere Lösung. Daher müßte man diese Art der Verlegung der Gewebeinspektion an die Webmaschine geradezu als technischen Rückschritt betrachten.

Aus der CH-PS-508 755 ist es bekannt, mittels eines an der Webmaschine ortsfest und starr angeordneten Detektionsgeräts die Fehler im Gewebe optisch zu ermitteln und die entsprechenden Fehlersignale zusammen mit für die Länge des Gewebes repräsentativen Längensignalen akkumulativ zu speichern. Die Fehlersignale werden anschließend mit Bezugsdaten verglichen und es wird ein Signal erzeugt, wenn die gespeicherte Gesamtfehlerzahl einen zulässigen Grenzwert überschreitet und die detektierten Fehler als schwer reparierbar eingestuft werden. Dieses Signal stellt die Webmaschine ab und betätigt einen Mechanismus zum Anbringen einer Schneidmarke am Geweberand sowie eine Alarmlampe.

Ein vergleichbares Verfahren ist auch in der DE-A-1 961 710 beschrieben. Hierbei weist das verwendete Detektionsgerät eine Lichtquelle auf, die sich über die ganze Breite der Gewebebahn erstreckt und Licht gegen die Gewebebahn strahlt, welches von dieser in einen entsprechend angeordneten Lichtempfänger reflektiert wird. Die zum Vergleich herangezogenen Bezugsdaten sind von der Form und der Art der Fehler sowie der Geschwindigkeit der Fehlerbildung abhängig. Aufgrund dieser Bezugsdaten wird mittels eines Komparators die Entscheidung getroffen, ob die gebildeten Fehlerstellen im folgenden Ausbesserungsvorgang reparabel sind oder nicht.

Bei einer in der GB-A-2 027 191 beschriebenen Abtastvorrichtung wird mittels einer Punktlichtquelle wie insbesondere einer Leuchtdiode auf der abzutastenden Bahn ein kleiner Lichtfleck erzeugt und das von der Bahn reflektierte Licht von einem Lichtempfänger empfangen, welcher beispielsweise durch einen einzelnen Phototransistor gebildet ist. Bei einer Abweichung der empfangenen Signale von der Norm wird ein Alarmschaltkreis aktiviert und/oder die Maschine abgeschaltet.

Bei den bekannten Verfahren und Vorrichtungen kann demnach nicht ausgeschlossen werden, daß sich die Stillstandshäufigkeit der Webmaschine erhöht und damit der Nutzeffekt geringer wird, ohne daß die Qualität des Gewebes verbessert würde oder bei der Warenschau irgendwelche Einsparungen gemacht werden könnten.

Der Erfindung liegt die Aufgabe zugrunde, die Gewebeüberwachung und -kontrolle dahingehend zu verbessern, daß die Gewebequalität wesentlich gesteigert wird, ohne daß es zu einer Senkung des Nutzeffekts kommt.

Die Aufgabe wird durch die Erfindung dadurch gelöst, daß mit dem Abtastkopf zeilenförmige Abtastbereiche der Gewebebahn abgetastet werden, deren Längsrichtung in Kettrichtung orientiert ist.

Aufgrund dieser Ausbildung spricht die Gewebeüberwachung in definierter Weise und zuverlässig im wesentlichen nur auf solche Fehler im Gewebe an, die entweder relativ große Teile der Gewebebahn betreffen, nicht ausgebessert oder durch Korrekturen an der Webmaschine vermieden werden können. Es is damit auf äußerst einfache Weise stets sichergestellt, daß die Webmaschine stets effektiv und rationell arbeitet. Aufgrund der Orientierung der Abtastzeilen in Kettrichtung werden insbesondere in Kettrichtung verlaufende Gewebefehler zuverlässig erkannt. Zu diesen Fehlern zählt die die Gewebequalität besonders stark beeinträchtigende Kettstreifigkeit, die beispielsweise durch Fehler im Webblatt oder durch in das Webfach ein- und aus diesem austauchende Organe, wie beispielsweise die Führungszähne einer Projektilwebmaschine, verursacht sein kann.

Hierbei werden insbesondere diejenigen Fehlersignale bevorzugt behandelt, die einen Gewebefehler von einer bestimmten Ausdehnung, Häufigkeit oder Periodizität repräsentieren. Es wird somit eine gewisse Klassierung vorgenommen.

Diese Abweichungen entsprechen den schwerwiegenden Gewebefehlern wie Kett- und Schußstreifen, welche üblicherweise eine relativ große Ausdehnung über die Gewebelänge bzw. -breite aufweisen, wobei die Kettstreifen, insbesondere bei Projektilwebmaschinen, außerdem in Schußrichtung periodisch auftreten können. Kettstreifen sind auch deshalb besonders gefürchtete Gewebefehler, weil sie einerseits unter dem im Websaal herrschenden Umständen oftmals vom Auge nur äußerst schwer zu erkennen sind und andererseits dennoch lange Stoffbahnen zu Ware zweiter Qualität machen können.

Obwohl die Abtastzeilen in Kettrichtung orientiert sind, werden auch Schußfehler, wie Anlaßstellen oder Schußstreifen erkannt. Zu diesem Zweck können die Signale der Sensoreinheit jeweils für mindestens einen der quer über die Gewebebreite verlaufenden bandartigen Abtastbereiche in einem Speicher zwischengespeichert und anschließend auf geeignete Weise sequentiell ausgelesen werden.

Gemäß einer ersten Weiterbildung des erfindungsgemäßen Verfahrens werden für die Auswertung der Signale des Abtastkopfes die Signale der verschiedenen, an der Webmaschine angeordneten Wächter, wie Kett- und Schußfadenwächter, berücksichtigt.

Diese Maßnahme kann helfen, die Gewebequalität weiter zu erhöhen, indem beispielsweise nach jedem durch ein Abstellsignal eines Kett- oder Schußfadenwächters bedingten Maschinenstillstand die Empfindlichkeit bei der Auswertung der Signale des Abtastkopfes erhöht wird, damit dieser Anlaßstellen sicher erkennt und anzeigt. Wesentliche Gewebeausfälle werden vermieden, da Anlaßstellen stets rechtzeitig und nicht erst bei der Warenschau erkannt werden.

Für die Auswertung der Signale des Abtastkopfs können auch für den Herstellungsprozeß des jeweiligen Gewebes spezifische Daten berücksichtigt werden. Derartige Daten können beispielsweise die Wechsel von einer leeren Schußfadenspule auf die nächste volle sein, damit überwacht werden kann, ob der richtige Schußfaden verwendet wird, oder aber auch Daten bezüglich der Gewebeleisten am Rand oder innerhalb des Gewebes, damit diese nicht wegen ihrer anderen Textur als fehlerhafte Abweichungen taxiert werden.

Bei strukturierten oder bunten Geweben können Daten über die Sollstruktur bzw. Farbe berücksichtigt werden. Das bedeutet, daß die Auswertung der Signale Informationen über gewollte Abweichungen enthält und damit auch Fehler in strukturierten oder bunten Geweben erkannt werden können.

Die Erfindung betrifft auch eine Vorrichtung zur Durchführung des Verfahrens, mit einer gegen die zu überwachende Gewebebahn gerichteten Beleuchtungseinheit, mit einer die Gewebebahn in Querrichtung abtastenden Sensoreinheit und mit einer an diese angeschlossenen Auswertestufe. Die erfindungsgemäße Vorrichtung zeichnet sich dadurch aus, daß das Signal der quer zur Gewebebahn bewegbaren Sensoreinheit jeweils für einen solchen Abtastbereich länglicher Form repräsentativ ist, dessen längere Dimension in Kettrichtung orientiert ist, und das Mittel zur Festlegung des Abtastbereichs vorgesehen sind.

Weitere Ausführungsvarianten der Erfindung sind in den abhängigen Ansprüchen angegeben.

Im folgenden wird die Erfindung anhand eines Ausführungsbeispiels und der Zeichnungen näher erläutert. Es zeigen:

Fig. 1     eine schematische Gesamtansicht einer mit einer Überwachungsvorrichtung ausgestatteten Webmaschine in perspektivischer Darstellung,

Fig. 2     eine Draufsicht auf die Überwachungsvorrichtung von Fig 1,

Fig. 3     einen Schnitt nach der Linie III - III von Fig. 2,

Fig. 4     einen Schnitt nach der Linie IV - IV von Fig. 3, und

Fig. 5     eine Draufsicht auf ein Gewebestück zur Funktionserläuterung.

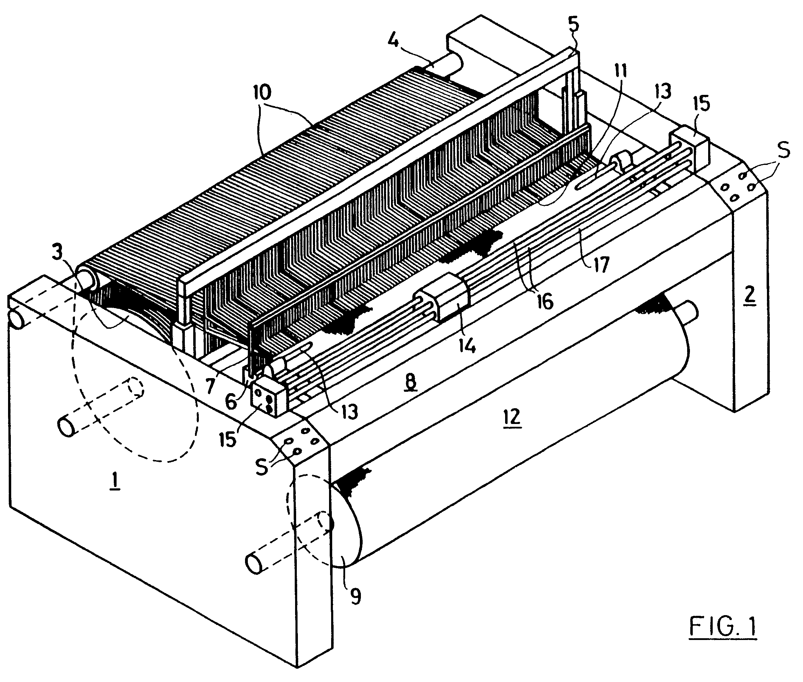

Die in Fig. 1 dargestellte Webmaschine besteht aus seitlichen Maschinenwänden 1 und 2, aus einem Kettbaum 3, einer Streichwalze 4, einer Fachbildevorrichtung 5, einem auf einer oszillierenden anstreichbaren Weblade 6 befestigten Webblatt 7, aus einer Brusttraverse 8 und aus einem Warenbaum 9. An beiden Maschinenwänden 1 und 2 befindet sich eine pultartige Bedienungsfläche mit einer Anzahl von Schaltern S für verschiedene Betriebsarten der Webmaschine.

Vom Kettbaum 3 laufen die Kettfäden 10 in bekannter Weise an die Gewebeanschlagkante 11, an welcher der jeweils eingetragene Schußfaden durch das Webblatt 7, angeschlagen wird. Das so hergestellte Gewebe liegt in Form einer Gewebebahn 12 vor. In Laufrichtung der Gewebebahn 12 unmittelbar nach der Gewebeanschlagkante 11 ist an beiden Gewebekanten je ein Breithalter 13 an einem Breithaltertisch befestigt, welcher seinerseits auf einem mit den Maschinenwänden verbundenen Träger montiert ist.

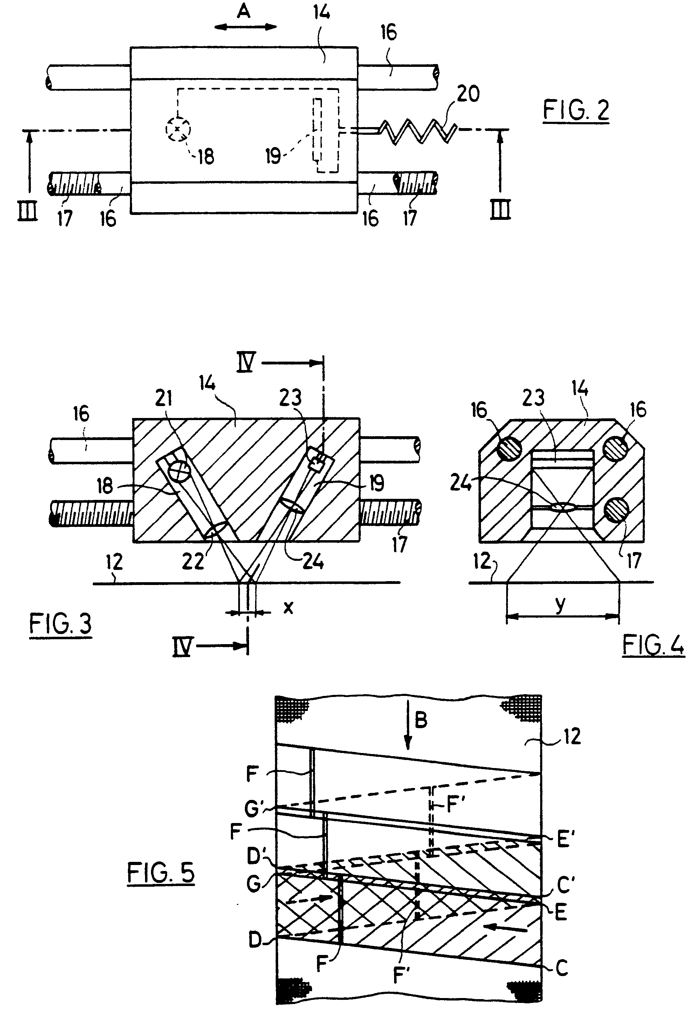

Da das Eintragssystem für den Schußfaden für die Erfindung nicht wesentlich ist, wurde in der Figur auf dessen Darstellung verzichtet. Das erfindungsgemäße Verfahren kann an jeder Art von Maschine zur Herstellung textiler oder textilartiger Flächengebilde verwendet werden, insbesondere an allen ein- und mehrphasigen Webmaschinen aller Arten von Eintragungssystemen wie Schützen, Greifer, Projektil, Luft, Wasser und dergleichen. Im Bereich zwische den Breithaltern 13 und der Brusttraverse 8, in dem die Gewebe 12 von oben frei zugänglich ist, ist oberhalb des Gewebes ein über die Webbreite in Richtung des Doppelpfeils A (Fig. 2) hin- und herbewegbarer Abtastkopf 14 zur Überwachung dem Gewebebahn 12 angeordnet. Darstellungsgemäß ist auf jeder Maschinenwand 1, 2 ein Lagerbock 15 montiert und in den beiden Lagerböcken 15 sind zwei Führungsstangen 16 und eine Gewindespindel 17 gelagert. Die Führungsstangen 16 dienen zur Führung und die Gewindespindel 17 dient zum Antrieb des Abtastkopfs 14 für dessen Hin- und Herbewegung über die Webbreite. Der Abtastkopf 14 ist somit in der Art des Schlittens einer Drehbank angetrieben. Die Gewindespindel 17 ist ihrerseits an einen nicht dargestellten Antrieb angeschlossen, der vorzugsweise vom Hauptantrieb der Webmaschine abgeleitet ist, sodaß die Drehzahl der Gewindespindel 17 und damit die Geschwindigkeit des Abtastkopfs 14 in einem festen Verhältnis zur Drehzahl der Webmaschine, also zur Anzahl der Schußeinträge pro Minute, und damit zur Abzugsgeschwindigkeit der Gewebebahn 12 steht.

Anhand der Fig. 2 bis 4 soll nun der Aufbau des Abtastkopfes 14 näher erläutert werden: Dieser besteht darstellungsgemäß aus einem von den beiden Führungsstangen 16 und der Gewindespindel 17 durchstossenen Gehäuse mit einer Beleuchtungseinheit 18 und einer Sensoreinheit 19, die beide über ein Spiralkabel 20 an eine nicht dargestellte Stromversorgung bzw. an eine Auswertstufe angeschlossen sind. In der letzteren werden die anfallenden elektrischen Signale in bekannter Weise analog oder digital weiterverarbeitet, beispielsweise auf die in der CH-Patentanmeldung Nr. 624/83 - 9 (CH-A-660 920, Veröff.- Dat. 29.5.87) und auf die in den in dieser Patentanmeldung zitierten Literaturstellen beschriebene Art. Da die Auswertung von durch die optische Abtastung eines flächenhaften Gegenstandes gewonnenen elektrischen Signalen zum Wissen des Fachmanns gehört und allgemein bekannt ist, ist die Auswertstufe nicht dargestellt.

Wie den Fig. 3 und 4 entnommen werden kann, wird von der aus einer Lichtquelle 21 und einer geeigneten Optik 22 gebildeten Beleuchtungseinheit 18 Licht unter einem schrägen Winkel auf die Gewebebahn 12 geworfen und das von diesem reflektierte Licht wird von der aus einem lichtempfindlichen Element, beispielsweise einer Photodiode 23, und aus einer Optik 24 bestehenden Sensoreinheit 19 empfangen.

Die Beleuchtungseinheit 18 ist so ausgelegt, daß auf der Gewebebahn 12 ein zeilenartiger Abtastfleck von der Breite x und der Länge y gebildet wird, wobei die Länge y der Abtastzeile in der Richtung der Kettfäden 10 (Fig. 1) und damit auch in der Abzugsrichtung der Gewebebahn 12 (Fig. 5, Pfeil B) liegt. Die Sensoreinheit 19 ist für die Auswertung der Abtastzeilen entsprechend ausgebildet und kann beispielsweise eine entsprechend geformte Photodiode oder auch eine Photodiodenzeile aufweisen. Es ist auch möglich, die Wirkung einer entsprechenden Schlitzmaske in der Auswertstufe auf die in der schon genannten CH-Patentanmeldung beschriebene Art elektronisch zu erzeugen.

In Fig. 5 ist schematisch die fortlaufende Abtastung der auf der Webmaschine hergestellten Gewebebahn 12 dargestellt, welche in Richtung des Pfeiles B abgezogen wird. Es sei angenommen, daß sich der Abtastkopf 14 zu Beginn am rechten Geweberand befindet, mit der Abtastzeile zwischen den Punkten C und C'. Der Abtastkopf 14 wird anschließend in Richtung des eingezeichneten Pfeiles nach links bewegt. Dabei überstreicht ein eine Abtastzeile F bildende Abtastbereie den schraffierten Bereich von C, C' nach D, D'. Von der Linie DD' am linken Geweberand bewegt sich schließlich die für die Rückbewegung gestrichelt eingezeichnete Abtastzeile F' in der Richtung des gestrichelt eingezeichneten Pfeiles nach rechts bis zur Linie EE' und von dort wieder nach links bis zur Linie GG', und so weiter.

Wie man der Figur 5 entnehmen kann, wird die Gewebebahn 12 lückenlos abgetastet, wobei sich die Abtastbereiche sowohl zwischen einem aufeinanderfolgenden Hin- und Rücklauf des Abtastkopfes 14 als auch zwischen benachbarten Bewegungen in der gleichen Richtung überlappen. Letzteres erkennt man an dem schmalen Überdeckungsstreifen von EC' nach GD' und an den anderen eingezeichneten Überdeckungsstreifen dieser Art.

Bei einer konkreten praktischen Ausführungsform beträgt die Breite x einer Abtastzeile F bzw. F' etwa 1 mm und die Länge y ist abhängig einerseits von der beabsichtigten Anzahl von aus je einem Hin- und einem Rücklauf des Abtastkopfes 14 bestehenden Abtastzyklen pro Minute und anderseits von der Schußeintragsleistung der Webmaschine, also von der Menge des pro Minute produzierten Gewebes, oder mit anderen Worten, vom Gewebevorschub. Wenn man davon ausgeht, daß eine moderne Düsenwebmaschine von etwa 2 m Nennbreite mit einer Maschinendrehzahl von 500 Umdrehungen pro Minute betrieben wird, dann ergibt das bei einem Viscose-Futterstoff oder bei einem Hemden-Batist einen Gewebevorschub von etwa 20 cm pro Minute. Arbeitet der Abtastkopf 14 mit einem Abtastzyklus pro Minute, so entspricht diesem ein Gewebevorschub von 20 cm und die Länge y einer Abtastzeile F bzw. F' wäre - ohne Überdeckungsstreifen - 20 cm. Um jeweils einen Überdeckungsstreifen zu erhalten, wird y etwas größer gewählt als 100 % des Gewebevorschubs pro Abtastzyklus, beispielsweise etwa 110 - 120 % davon.

Wie schon eingangs bemerkt wurde, ist die Anwendung des beschriebenen Überwachungsverfahrens nicht auf Webmaschinen beschränkt. Bei der Anwendung an Webmaschinen muß der Abtastkopf 14 nicht auf die in Fig. 1 dargestellte Art angeordnet zu sein. Der Abtastkopf 14 könnte beispielsweise auch mit Durchlicht arbeiten, oder er könnte auch unterhalb der Gewebebahn 12 in einer entsprechenden Führung im Maschinentisch angeordnet sein und hin- und herbewegt werden. Wenn der Warenbaum nicht in der in Fig. 1 dargestellten Art in der Webmaschine gelagert ist, sondern ein Grossdockenwickler verwendet wird, dann könnte die Abtastung der Gewebebahn 12 auch im Bereich zwischen der Brusttraverse der Webmaschine und der Grossdocke stattfinden. Ebenso könnte anstelle eines einzigen Abtastkopfes 14 mehrere, beispielsweise zwei, Abtastköpfe verwendet werden.

Am Ausgang der Sensoreinheit 19 (Fig. 3, 4) fallen für die einzelnen Abtastzeilen F, F' (Fig. 5) charakteristische Leuchtstärkewerte an, der in der Auswertstufe nach einer allfälligen Vorfilterung einer Schwellwertstufe zugeführt werden. Jeder Gewebefehler, der bei der Gewebeinspektion von Auge als solcher erkannt würde, bewirkt bei der jeweiligen Abtastzeile F bzw. F' eine entsprechende Änderung des Leuchtstärkewertes, welche von der Schwellwertstufe dedektiert wird und daher ein entsprechendes Alarmsignal auslösen und gegebenenfalls die Webmaschine abstelen kann. Die Webmaschine selbst verfügt ebenfalls über Sicherheitseinrichtungen, die bei einem Fehlen die Maschine abstellen und dem Bedienungspersonal anzeigen, daß ein Webfehler repariert werden muß. Diese Sicherheitseinrichtungen sind als Kettfadenwächter, Geschirrfadenwächter und Schußfadenwächter bekannt.

Dadurch, daß die Abtastzeilen F, F' in Kettrichtung orientiert sind, sind die in der Auswerteinheit gewonnenen Signale besonders geeignet, Gewebefehler zu erkennen, die in Kettrichtung verlaufen. Zu diesen Fehlern zählt die die Gewebequalität besonders stark beeinträchtigende Kettstreifigkeit, die beispielsweise durch Fehler im Webblatt oder durch in das Webfach ein- und aus diesem austauchende Organe, wie beispielsweise die Führungszähne einer Projektilwebmaschine verursacht sein kann. Die Kettstreifen erstrecken sich in beiden Fällen über eine große Länge des Gewebes, haben also eine bestimmte Ausdehung; im zweiten Fall treten sie zudem periodisch auf. Da gerade diese Fehler die Gewebequalität sehr stark beeinträchtigen und einen großen Gewebeausfall zur Folge haben, sollen sie durch die beschriebene Überwachung unbedingt erkannt werden. Zu diesem Zweck werden diejenigen Fehlersignale bevorzugt behandelt, die einen Gewebefehler von einer bestimmten Ausdehnung, Häufigkeit oder Periodizität repräsentieren. Die Ausdehnung erkennt man an der Differenz des gemessenen Leuchtstärkewertes pro Abtastzeile zum Schwellwert und/oder daran, daß eine derartige Abweichung innerhalb mehrerer Abtastzyklen immer wieder am gleichen Ort auftritt. Häufigkeit und Periodizität erkennt man am mehrmaligen beziehungsweise periodischen Auftreten eines Fehlersignals innerhalb eines Abtastzyklus.

Obwohl die Abtastzeilen F, F' (Fig. 5) in Kettrichtung orientiert sind, werden auch Schußfehler, wie Anlaßtellen oder Schussstreifen erkannt. Zu diesem Zweck werden die Signale der Sensoreinheit jeweils für mindestens einen der quer über die Gewebebreite verlaufenden bandartigen Abtastbereiche in einem Speicher zwischengespeichert und anschließend auf geeignete Art sequentiell ausgelesen. Da diese Art der Signalverarbeitung zum Verständnis des Fachmanns gehört, wird sie hier nicht näher beschrieben.

Da die Anlaßstellen eine ebenfalls sehr gefürchtete Art von Gewebefehlern darstellen, welche aber durch Änderung der Kettspannung ganz oder teilweise verhindert werden können, sollten diese ebenfalls unbedingt erkannt werden. Es hat sich gezeigt, daß dies dadurch sichergestellt werden kann, daß man beim Anlassen der Webmaschine nach einem Maschinenstillstand die Empfindlichkeit der Auswertstufe erhöht. Dies erfolgt am einfachsten dadurch, daß die verschiedenen Sicherheitseinrichtungen der Webmaschine mit dem Abtastkopf 14 der mit der Auswerteinheit verbunden werden und die Empfindlichkeit durch das Abstellsignal der Sicherheitseinrichtung automatisch für eine bestimmte Anzahl von auf das Anlassen der Webmaschine folgenden Abtastzyklen erhöht wird.

Neben den Signalen der Sicherheitseinrichtungen können bei der Auswertung der Signale der Sensoreinheit 19 (Fig. 3) noch weitere für den Herstellungsprozess des jeweiligen Gewebes spezifische Daten berücksichtigt werden. Darartige Daten können beispielsweise Signale eines den Wechsel von einer leeren auf eine volle Schußfadenspule überwachenden Wächters sein, durch welche Signale die Empfindlichkeit der Auswertstufe für einige Abtastzyklen erhöht würde. Auf diese Weise ließe sich überwachen, ob die volle Schußfadenspule auch keinen falschen Schußfaden liefert. Andere derartige Daten könnten die Gewebeleisten betreffen, damit nicht beispielsweise Einlegeleisten wegen ihrer anderen Textur als fehlerhafte Abweichungen taxiert werden.

Bei strukturierten oder bunten Geweben können Daten über die Sollstruktur beziehungsweise Farbe berücksichtigt werden. Das bedeutet, daß die Auswertung der Signale Informationen über gewollte Abweichungen erhält.

**Patentansprüche**

1. Verfahren zur automatischen Überwachung von textilen Flächengebilden, insbesondere Gewebebahnen, bei welchem die Gewebebahnen unmittelbar an der Webmaschine oder an einer von dieser räumlich getrennten Gewebeaufwickelvorrichtung durch eine elektro-optische Einrichtung fortlaufend abgetastet und fehlerhafte Abweichungen von der als normal bewerteten Textur der Gewebebahnen festgestellt und angezeigt werden, wobei als elektro-optische Einrichtung ein die Gewebebahn überstreichender Abtastkopf verwendet wird und bei der Auswertung der Signale des Abtastkopfes diejenigen Signale bevorzugt werden, welche eine fehlerhafte Abweichung von einer bestimmten Ausdehnung und/oder Häufigkeit und/oder Periodizität repräsentieren,
dadurch gekennzeichnet,
daß mit dem Abtastkopf (14) zeilenförmige Abtastbereiche (F, F') der Gewebebahn (12) abgetastet werden, deren Längsrichtung in Kettrichtung orientiert ist.

2. Verfahren nach Anspruch 1,
dadurch gekennzeichnet daß für die Auswertung der Signale des Abtastkopfes (14) die Signale der verschiedenen an der Webmaschine angeordneten Wächter, wie Kett- und Schußfadenwächter, berücksichtigt werden.

3. Verfahren nach Anspruch 1 oder 2,
dadurch gekennzeichnet,
daß für die Auswertung der Signale des Abtastkopfes (14) für den Herstellungsprozeß des jeweiligen Gewebes (12) spezifische Daten berücksichtigt werden.

4. Verfahren nach Anspruch 1 oder 2,
dadurch gekennzeichnet,
daß zur sicheren Erkennung von Anlaßstellen durch jedes Abstellsignal eines an der Webmaschine angeordneten Wächters für eine bestimmte Anzahl von Abtastzyklen nach dem Anlassen der Webmaschine die Empfindlichkeit der Auswertung automatisch erhöht wird.

5. Vorrichtung zur Durchführung des Verfahrens nach Anspruch 1, mit einer gegen die zu überwachende Gewebebahn gerichteten Beleuchtungseinheit, mit einer die Gewebebahn in Querrichtung abtastenden Sensoreinheit und mit einer an diese angeschlossenen Auswertestufe,
dadurch gekennzeichnet,
daß das Signal der quer zur Gewebebahn (12) bewegbaren Sensoreinheit (19) jeweils für einen solchen Abtastbereich (F, F') länglicher Form repräsentativ ist, dessen längere Dimension in Kettrichtung orientiert ist, und daß Mittel zur Festlegung des Abtastbereichs vorgesehen sind.

6. Vorrichtung nach Anspruch 5,
dadurch gekennzeichnet
daß die Mittel zur Festlegung des Abtastbereichs (F, F') durch eine über die Gewebebreite bewegbare und zwischen der Gewebebahn (12) und der Sensoreinheit (19) angeordnete Schlitzmaske oder eine entsprechende Optik (24) gebildet sind.

7. Vorrichtung nach Anspruch 5,
dadurch gekennzeichnet,
daß die Mittel zur Festlegung des Abtastbereichs (F, F') durch eine in Kettrichtung verlaufende Zeile lichtempfindlicher Elemente gebildet sind.

8. Vorrichtung nach einem der Ansprüche 5 bis 7,
dadurch gekennzeichnet,
daß die Beleuchtungseinheit (18) und die Sensoreinheit (19) in einem gemeinsamen Abtastkopf (14) angeordnet sind, welcher oberhalb der Gewebebahn (12) schlittenartig geführt und über die Gewebebreite ozillierend antreibbar ist.

9. Vorrichtung nach Anspruch 8,
dadurch gekennzeichnet,
daß der Antrieb des Abtastkopfes (14) von der Hauptwelle der Webmaschine abgeleitet ist.

10. Vorrichtung nach Anspruch 9,
dadurch gekennzeichnet,
daß die Breite (x) eines Abtastbereichs (F, F') etwa 1 mm und dessen Länge (y) etwas mehr als 100 %, vorzugsweise etwa 110 bis 120 % des Gewebevorschubs pro Abtastzyklus beträgt, wobei ein Abtastzyklus einer Hin- und Herbewegung des Abtastkopfes (14) für die Gewebebreite entspricht.

## Claims

1. Method for the automatic monitoring of planar textile structures, in particular fabric webs, wherein the fabric webs are continuously scanned by an electrooptical means directly at the weaving machine, or at a fabric coiling apparatus spatially separated from the latter, and faulty deviations from the texture of the fabric webs which is regarded as normal are determined and indicated, with a scanning head which sweeps over the fabric web being used as the electrooptical means and wherein, during the evaluation of the signals of the scanning head those signals are preferred which represent a faulty deviation from a specific extent and/or frequency and/or periodicity,
characterized in that,
with the scanning head (14), line-like scanning regions (F, F') of the fabric web (12) are scanned of which the longitudinal direction is orientated in the warp direction.

2. Method in accordance with claim 1, characterized in that the signals of the various monitors arranged at the weaving machine, such as warp and weft filament monitors are taken into account for the evaluation of the signals of the scanning head (14).

3. Method in accordance with claim 1 or claim 2,
characterized in that
data specific to the manufacturing process for the respective fabric (12) are taken into account for the evaluation of the signals of the scanning head (14).

4. Method in accordance with claim 1 or claim 2,
characterized in that
for the reliable recognition of starting positions the sensitivity of the evaluation is automatically increased by each stop signal of a monitor arranged at the weaving machine for a specific number of scanning cycles after the starting of the weaving machine.

5. Apparatus for carrying out the method of claim 1 comprising an illumination unit directed towards the fabric web to be monitored, a sensor unit which scan the fabric web in the transverse direction and an evaluation stage connected to the sensor unit,
characterized in that
the signal of the sensor unit (19) which is mowable transverse to the fabric web (12) is respectively representative for such a scanning region (F, F') of elongate shape, with its longer dimension orientated in the warp direction; and in that means are provided for specifying the scanning region.

6. Apparatus in accordance with claim 5, characterized in that the means for specifying the scanning region (F, F') are formed by a slot mask movable over the width of the fabric and arranged between the fabric web (12) and the sensor unit (19), or by a corresponding optical system (24).

7. Apparatus in accordance with claim 5, characterized in that the means for specifying the scanning region (F, F') are formed by a row of light sensitive elements extending in the warp direction.

8. Apparatus in accordance with one of the claims 5 to 7, characterized in that the illuminating unit (18) and the sensor unit (19) are arranged in a common scanning head (14) which is guided in carriage-like manner above the fabric web (12) and is oscillatingly drivable over the width of the fabric.

9. Apparatus in accordance with claim 9, characterized in that the drive of the scanning head (14) is derived from the main shaft of the weaving machine.

10. Apparatus in accordance with claim 9, characterized in that the width (x) of a scanning region (F, F') amounts to approximately 1 mm and its length (y) to somewhat more than 100 % and preferably approximately 110 to 120 % of the fabric feed per scanning cycle, with a scanning cycle corresponding to one to and fro movement of the scanning head (14) for the fabric width.

## Revendications

1. Procédé pour la surveillance automatique de configurations textiles planes, en particulier bandes de tissu, suivant lequel les bandes de tissu sont explorées en continu, directement sur le métier automatique ou sur un dispositif de bobinage du tissu séparé dans l'espace du métier, au moyen d'un dispositif électro-optique, et les défauts consistant en des anomalies par rapport à la texture estimée normale des bandes de tissu sont décelés et signalés, le dispositif électro-optique consistant en une tête d'exploitation balayant le tissu et, lors de l'exploitation des signaux de la tête d'exploration, la préférence étant donnée à ceux des signaux qui représentent une anomalie défectueuse présentant une extension et/ou une fréquence et/ou une périodicité déterminées, caractérisé en ce que sont explorées avec la tête de balayage (14) des zones de balayage (F, F') en forme de ligne de la bande de tissu (12), dont le sens longitudinal est orienté dans le sens de la chaîne.

2. Procédé selon la revendication 1, caractérisé en ce que sont pris en compte pour l'exploitation des signaux de la tête de balayage (14) les signaux des différents organes de contrôle disposés sur le métier automatique, tels que casse-chaîne et casse-trame.

3. Procédé selon la revendication 1 ou 2, caractérisé en ce que sont pris en compte pour l'exploitation des signaux de la tête de balayage (14) des données spécifiques pour l'opération de fabrication du tissu (12) en question.

4. Procédé selon la revendication 1 ou 2, caractérisé en ce que, pour détecter de façon sûre les défauts dus au démarrage, chaque signal commandant l'arrêt de la machine provenant d'un organe de contrôle disposé sur le métier automatique augmente automatiquement la sensibilité de l'étage d'exploitation pour la durée d'un nombre déterminé de cycles de balayage apres le démarrage du métier automatique.

5. Dispositif pour la mise en oeuvre du procédé selon la revendication 1, avec une unité d'éclairage dirigée vers la bande de tissu à surveiller, avec un bloc capteur balayant la bande de tissu dans le sens transversal et avec un étage d'exploitation raccordé à celui-ci, caractérisé en ce que chaque signal du bloc capteur (19) se déplaçant transversalement par rapport à la bande de tissu (12) est représentatif pour une zone de balayage (F, F') de forme allongée dont la dimension dans le sens de la longueur est orientée dans le sens de la chaîne, et qu'il est prévu des moyens pour définir la zone de balayage.

6. Dispositif selon la revendication 5, caractérisé en ce que les moyens prévus pour définir la zone de balayage (F, F') sont formés par un masque à fente ou une optique (24) correspondante disposés entre la bande de tissu (12) et le bloc capteur (19) et pouvant se déplacer sur la largeur du tissu.

7. Dispositif selon la revendication 5, caractérisé en ce que les moyens prévus pour définir la zone de balayage (F, F') sont formés par une ligne d'éléments photosensibles disposés dans le sens de la chaîne.

8. Dispositif selon une quelconque des revendications 5 à 7, caractérisé en ce que l'unité d'éclairage (18) et le bloc capteur (19) sont disposés dans une tête de balayage (14) commune qui est guidée à la façon d'un chariot au-dessus de la bande de tissu (12) et qui peut être actionnée suivant un mouvement de va-et-vient sur la largeur de la bande de tissu.

9. Dispositif selon la revendication 8, caractérisé en ce que la commande d'entraînement de la tête de balayage (14) est dérivée de l'arbre principal du métier automatique.

10. Dispositif selon la revendication 9, caractérisé en ce que la largeur (x) d'une zone de balayage (F, F') est d'environ 1 mm et sa longueur (y) est légèrement supérieure à 100 %, de préférence égale à environ 110 à 120 % de l'avancement du tissu pendant un cycle de balayage, un cycle de balayage correspondant à un aller et retour de la tête de balayage (14) pour la largeur du tissu.

FIG. 1

FIG. 2

FIG. 3

FIG. 4

FIG. 5